# EUROPÄISCHE PATENTSCHRIFT

(11) **EP 3 793 866 B1**
(45) Veröffentlichungstag und Bekanntmachung des Hinweises auf die Patenterteilung: **19.03.2025**
(21) Anmeldenummer: 19722025.4
(22) Anmeldetag: 26.04.2019
(51) Int. Cl.: B60R 11/02, B60R 7/04

(54) **ABLAGE FÜR EIN FAHRZEUG**
TRAY FOR A VEHICLE
RÉCEPTACLE POUR UN VÉHICULE

(30) Priorität: 14.05.2018 DE 102018207431; 07.11.2018 DE 102018219007
(43) Veröffentlichungstag der Anmeldung: 24.03.2021
(73) Patentinhaber: VOLKSWAGEN AKTIENGESELLSCHAFT, 38440 Wolfsburg (DE)
(72) Erfinder: GRIMBACH, Thomas, 30161 Hannover (DE); REHLING, Peter, 38518 Gifhorn (DE); FALK, Gerrit, 38440 Wolfsburg (DE)
(74) Vertreter: Bals & Vogel Patentanwälte PartGmbB
(86) Internationale Anmeldenummer: PCT/EP2019/060742
(87) Internationale Veröffentlichungsnummer: WO 2019/219353

(56) Entgegenhaltungen:
- EP-A2- 1 284 216
- DE-A1- 102008 047 703
- DE-A1- 102010 056 291
- JP-U- S6 366 356
- JP-U- S63 119 447
- US-A1- 2003 155 787
- US-A1- 2015 217 667

## Beschreibung

Die vorliegende Erfindung betrifft eine Ablage für ein Fahrzeug, welche zumindest eine Ablagefläche aufweist. Ferner bezieht sich die Erfindung auf ein Verfahren zur Herstellung einer Ablage für ein Fahrzeug.

Es ist aus dem Stand der Technik bekannt, dass Ablagen im Bereich einer Mittelkonsole eines Fahrzeuges genutzt werden, um kleinere Gegenstände und/oder ein mobiles Gerät während der Fahrt abzulegen. Eine gute Zugänglichkeit und Erreichbarkeit dieser Gegenstände bzw. des mobilen Geräts wird dabei oft nur dann ermöglicht, wenn die Gegenstände bzw. das mobile Gerät offen zugänglich sind. Handelt es sich bei dem mobilen Gerät um ein Mobiltelefon, so führt die freigegebene Sicht darauf allerdings unter Umständen zur Ablenkung des Fahrers. Wenn die Sichtbarkeit des Mobiltelefons verhindert wird, z. B. durch Rollos oder Deckel oder dergleichen, so führt dies jedoch zu einer Verringerung der Erreichbarkeit.

Aus der DE 10 2015 222 685 A1, DE 20 2011 105 255 U1 und DE 10 2016 006 346 A1 sowie JP S63 119447 U sind Ablagen bekannt. Aus der DE 10 2010 056291 A1 ist eine Ablage gemäß dem Oberbegriff des Anspruchs 1 bekannt.

Es ist daher eine Aufgabe der vorliegenden Erfindung, die voranstehend beschriebenen Nachteile zumindest teilweise zu beheben. Insbesondere ist es Aufgabe der vorliegenden Erfindung, die Zugänglichkeit und Erreichbarkeit von abgelegten Gegenständen und/oder eines mobilen Geräts bei einer Ablage zu erhöhen, und vorzugsweise gleichzeitig den Betrieb des Fahrzeuges sicherer zu ermöglichen und/oder eine kostengünstigere Lösung für eine Ablage eines mobilen Geräts vorzugschlagen.

Die voranstehende Aufgabe wird gelöst durch eine Ablage mit den Merkmalen des Anspruchs 1 und durch ein Verfahren mit den Merkmalen des Anspruchs 12. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Ablage beschrieben sind, selbstverständlich auch im Zusammenhang mit dem erfindungsgemäßen Verfahren, und jeweils umgekehrt, sodass bezüglich der Offenbarung zu den einzelnen Erfindungsaspekten stets wechselseitig Bezug genommen wird bzw. werden kann.

Die Aufgabe wird gelöst durch eine Ablage für ein Fahrzeug zur Aufnahme wenigstens eines mobilen Geräts, vorzugsweise eines Mobiltelefons, aufweisend:
- ein Ablageelement, welches wenigstens einen Aufnahmeraum zur Aufnahme des mobilen (d. h. tragbaren) Geräts ausbildet,
- ein Abdeckelement, welches den Aufnahmeraum zumindest teilweise abdeckt, sodass vorzugsweise eine Sicht auf das mobile Gerät im Aufnahmeraum zumindest eingeschränkt werden kann,
- ein Deckelelement, welches am Abdeckelement ausgebildet ist, vorzugsweise dieses umflutet, und das Abdeckelement zumindest teilweise umgibt, sodass das Deckelelement eine Ablagefläche (aus einer Weichkomponente) ausbildet.

Hierbei ist es erfindungsgemäß vorgesehen, dass das Deckelelement aufklappbar mit dem Ablageelement verbunden ist und den Aufnahmeraum zumindest teilweise abdeckt, wobei das Abdeckelement erfindungsgemäß zur Stabilisierung zumindest des Deckelelements und/oder der gesamten Ablage ausgebildet ist. Dies hat den Vorteil, dass ein einfaches Stabilisierungsmittel genutzt werden kann, um kostengünstig eine vielseitig nutzbare Ablage bereitzustellen. Die Abdeckung des Aufnahmeraums durch das Abdeckelement und/oder das Deckelelement hat ferner den Vorteil, dass eine Sicht auf das mobile Gerät eingeschränkt werden kann, und somit das Risiko einer Ablenkung für einen Fahrer verringert wird.

Vorzugsweise können dabei das Deckelelement und das Abdeckelement einteilig ausgebildet und/oder fest und/oder starr miteinander verbunden sein. Vorzugsweise bewirkt das Aufklappen des Deckelelements und/oder (damit gemeinsam) des Abdeckelements, dass der Aufnahmeraum zumindest teilweise aufgedeckt wird, und somit im aufgeklappten Zustand des Deckel- und/oder Abdeckelements eine Zugänglichkeit für den Aufnahmeraum im Vergleich zum zugeklappten Zustand des Deckel- und/oder Abdeckelements erhöht ist. Dies hat den Vorteil, dass durch das Aufklappen (auch: Auslenken) des Abdeck- und/oder Deckelelements das mobile Gerät leichter entnommen werden kann. Im zugeklappten Zustand ist hingegen die Sicht auf das mobile Gerät eingeschränkt, vorzugsweise sodass die Sicht auf ein Display des Geräts verhindert ist.

Bevorzugt wird ferner der Aufnahmeraum räumlich begrenzt durch einen Boden des Aufnahmeelements und/oder eine Wandung des Aufnahmeelements und/oder (zumindest im zugeklappten Zustand zumindest teilweise) durch das Abdeck- und/oder Deckelelement. Der nicht hierdurch begrenzte Bereich bildet vorzugsweise eine Öffnung für den Aufnahmeraum und dient bevorzugt zum Einlegen und Entnehmen des mobilen Geräts.

Es ist erfindungsgemäß vorgesehen, dass das Abdeckelement aus einer Hartkomponente hergestellt ist, wobei das Ablageelement und das Deckelelement jeweils aus einer Weichkomponente hergestellt sind. Dies hat den Vorteil, dass Gegenstände und/oder das mobile Gerät zuverlässig und rutschfest in der Ablage aufgenommen werden können, wenn sie die Weichkomponente kontaktieren, wobei gleichzeitig durch die Hartkomponente eine ausreichende Stabilität bereitgestellt wird. Dabei können sämtliche Bestandteile des Ablageelements und/oder des Deckelelements aus der Weichkomponente hergestellt sein.

Folglich ist es bei der erfindungsgemäßen Ablage vorgesehen, dass das Abdeckelement aus einem ersten Material, einer Hartkomponente, hergestellt ist und das Ablageelement und das Deckelelement aus einem zweiten Material, einer Weichkomponente, hergestellt sind, wobei sich das erste von dem zweiten Material unterscheidet. Bevorzugt kann das zweite Material eine größere Elastizität aufweisen als das erste Material, und somit vorzugsweise gummiartig ausgebildet sein. In anderen Worten kann das Ablageelement und/oder das Deckelelement auch als Gummimatte aufgefasst werden. Das erste Material bzw. die Hartkomponente weist eine größere Härte auf als das zweite Material bzw. die Weichkomponente. Vorzugsweise ist das erste und/oder zweite Material jeweils als ein Kunststoff ausgeführt. Bevorzugt kann unter der Härte des ersten und/oder zweiten Materials eine Shore-Härte verstanden werden. Bspw. sind das erste Material und/oder das Abdeckelement starr und/oder nichtelastisch ausgebildet, um eine ausreichende Stabilität für die Ablage bereitzustellen. Die Hartkomponente kann z. B. einen thermoplastischen Kunststoff und/oder einen thermoplastischen Terpolymer und/oder einen Acrylnitril-Butadien-Styrol-Copolymer (ABS) aufweisen. Die Weichkomponente, insbesondere die an die Hartkomponente angespritzte Weichkomponente der Ablage, kann z. B. einen thermoplastischen Elastomer (TPE) aufweisen.

Das Ablageelement und/oder das Deckelelement und/oder die Ablagefläche des Deckelelements und/oder der Boden des Ablageelements und/oder die Weichkomponente können ferner zur Pufferung und/oder zur Fixierung und/oder Dämpfung und/oder zur Verbesserung des Rutschverhaltens als Ablage für das Gerät und/oder weitere Gegenstände ausgeführt sein. Hierzu werden insbesondere die elastischen Eigenschaften der Weichkomponente genutzt. Die Weichkomponente kann entsprechend eine höhere Elastizität aufweisen als die Hartkomponente. Hingegen können das Abdeckelement und/oder die Hartkomponente zur Stabilisierung dienen, vorzugsweise als einziges nicht-elastisches und/oder starres Element der Ablage.

Ferner ist es optional bei der erfindungsgemäßen Ablage vorgesehen, dass die Ablage als Zweikomponenten-Spritzgussteil ausgeführt ist, vorzugsweise einstückig und/oder einteilig und/oder monolithisch. Dies ermöglicht eine kompakte Bauweise sowie eine besonders kostengünstige Herstellung.

Es kann von Vorteil sein, wenn im Rahmen der Erfindung ein Filmscharnier vorgesehen ist, welches das Deckelelement und/oder das Abdeckelement aufklappbar mit dem Ablageelement verbindet. Das Filmscharnier ist vorteilhafterweise in einem hinteren Bereich - also auf einer Rückseite - der Ablage angeordnet, wobei der hintere Bereich ggf. der Bereich ist, welcher im in der Mittelkonsole eingesetzten Zustand der Ablage in Richtung Fahrzeugboden ausgerichtet ist und/oder vom Fahrzeuginnenraum und/oder vom Fahrer abgewandt ausgerichtet ist. Dies ermöglicht es, dass der Fahrer komfortabel und einfach das Deckelelement aufklappen kann, um das mobile Gerät zu entnehmen. Bevorzugt ist dabei eine Öffnung des Aufnahmeraums auf einer Vorderseite (d. h. dem Fahrer bzw. Fahrzeuginnenraum zugewandten Seite) der Ablage ausgebildet und durch eine Vorderkante des Deckelelements und einer davon beabstandeten Vorderkante des Ablageelements begrenzt. Besonders bevorzugt ist die Öffnung dazu ausgeführt, dass das mobile Gerät im zugeklappten Zustand des Deckelelements (bei kleinerer Öffnung) in den Aufnahmeraum eingeschoben werden kann, ohne dass das Deckelelement hierzu aufgeklappt werden muss. Die Öffnung wird z. B. vergrößert, wenn das Deckelelement aufgeklappt wird. Um das Aufklappen zuverlässig zu ermöglichen, kann das Filmscharnier an das Deckelelement und/oder an das Ablageelement angespritzt sein, vorzugsweise an der Rückseite der Ablage.

Weiterhin kann die Erfindung bei einer Ablage vorsehen, dass das Filmscharnier zwischen einem Wandelement und der Ablagefläche des Deckelelementes ausgebildet ist. Je nach Anordnung der Ablage in einer Mittelkonsole oder zwischen einer Instrumententafel und der Mittelkonsole kann das Wandelement das hintere Wandelement oder das seitliche Wandelement sein. Vorzugsweise ist das Wandelement, in der Nähe von welchem das Filmscharnier ausgebildet ist, das Wandelement in einem hinteren Bereich der Ablage, das im eingesetzten Zustand der Ablage vom Fahrzeuginnenraum und/oder vom Fahrer abgewandt ist. Im Bereich des Überganges des Wandelementes zur Ablagefläche ist die Materialstärke des Deckelelementes reduziert und eignet sich auf eine vorteilhafte Weise zur Ausbildung des Filmscharniers.

Des Weiteren kann die Erfindung bei einer Ablage vorsehen, dass das Filmscharnier mindestens ein Rückstellelement aufweist, um das Deckelelement beim Überführen aus einem aufgeklappten Zustand in einen zugeklappten Zustand zu unterstützen. Im Betrieb der Ablage, wenn das Deckelelement mehrfach aufgeklappt und zugeklappt wird, kann es dazu kommen, dass das Deckelelement selbständig nicht vollständig in den vorgesehen zugeklappten Zustand zurückfällt. Dies kann bspw. dann geschehen, wenn mindestens eines der elastischen Elemente der Ablage zu stark beansprucht und/oder gedehnt wird. Dabei besteht das Risiko, dass das automatische Schließen der klappbaren Ablage nach mehrfacher Betätigung nicht mehr vollständig gegeben ist. Im schlimmsten Falle wird die Ablage beschädigt und muss ausgetauscht werden. Das Rückstellelement kann auf eine vorteilhafterweise dafür sorgen, dass das Deckelelement sicher seinen vorgesehenen, zugeklappten Zustand erreicht. Somit kann die Einsatzdauer der Ablage erheblich verlängert werden.

Darüber hinaus kann die Erfindung bei einer Ablage vorsehen, dass das mindestens eine Rückstellelement federnd und/oder elastisch ausgebildet ist. Somit kann das Deckelelement vorteilhafterweise aus dem aufgeklappten Zustand in den zugeklappten Zustand federelastisch beaufschlagt werden. Somit kann das Deckelelement in den zugeklappten Zustand zurückfedern.

Im Rahmen der Erfindung ist es denkbar, dass das mindestens eine Rückstellelement aus einer Weichkomponente ausgebildet ist. Die Weichkomponente kann vorzugsweise die Gleiche sein, wie die des Deckelelementes. Auf diese Weise kann die Herstellung des Rückstellelementes vereinfacht werden und vorzugsweise zusammen mit der Ausbildung des Deckelelementes erfolgen. Gleichwohl ist es aber auch denkbar, dass das Rückstellelement nachträglich am Deckelelement angebracht werden kann, bspw. durch eine stoffschlüssige Verbindung, wie z. B. Kleben oder Schweißen. Hierbei kann das Rückstellelement aus dem gleichen oder einem anderen Material ausgeführt sein als das Deckelelement.

Außerdem kann die Erfindung bei einer Ablage vorsehen, dass das mindestens eine Rückstellelement in Form eines S-förmigen Stegs oder eines C-förmigen Stegs ausgebildet ist.

Somit kann eine federnde Funktion im Rahmen des Rückstellelementes alleine furch die Form des Rückstellelementes realisiert werden. Beim Aufklappen des Deckelelementes kann das Rückstellelement in den Windungen des S-förmigen Stegs oder in der Rundung des C-förmigen Stegs zusammengepresst werden. Wenn das Deckelelement losgelassen wird, erfolgt die Entspannung des Rückstellelementes und Zurückfederung des Deckelelementes in den vorgesehenen, zugeklappten Zustand. Des Weiteren ist es denkbar, dass mindestens ein Rückstellelement in Form eines Dämpfungselementes oder eines Nockens ausgebildet sein kann, an dem das Deckelelement einfach abfedern kann.

Ferner kann die Erfindung bei einer Ablage vorsehen, dass das mindestens eine Rückstellelement zwischen einem hinteren Wandelement und einem seitlichen Wandelement des Deckelelementes ausgebildet ist. An dieser Stelle verläuft der Filmscharnier und das Deckelelement weist dort eine Verjüngung auf. Hier kann ein relativ kurzer Verstellweg des Rückstellelementes realisiert werden, sodass das Rückstellelement das Deckelelement stabil in den vorgesehenen, zugeklappten Zustand überführen kann.

Erfindungsgemäß weist das Deckelelement wenigstens ein Wandelement auf, welches an einem Rand der Ablagefläche (vorzugsweise orthogonal) absteht und somit die Ablagefläche begrenzt, sodass das Deckelelement eine Schale zur Aufnahme von Gegenständen ausbildet. Das wenigstens eine Wandelement schützt auf diese Weise in die Schale aufgenommene Gegenstände vor einem Herausfallen. Zusätzlich kann dies dadurch unterstützt werden, dass die Ablagefläche, auf der die Gegenstände aufliegen, rutschfest und/oder aus einer Weichkomponente und/oder elastisch ausgebildet ist. Weiter kann es möglich sein, dass die (insbesondere gesamte) Ablagefläche das Abdeckelement (vorzugsweise vollständig) überdeckt. Damit ist gewährleistet, dass die aufgenommenen Gegenstände ausschließlich die Ablagefläche und nicht das Abdeckelement kontaktieren, und dennoch die Gegenstände stabil auf dem Abdeckelement aufliegen können. Bevorzugt weist das Ablageelement wenigstens eine Wandung auf, welche von einem Rand eines Bodens des Ablageelements absteht, sodass das Ablageelement eine Schale ausbildet, welche den Aufnahmeraum zur Aufnahme des mobilen Geräts bereitstellt.

Es kann weiter möglich sein, dass das Deckelelement das Abdeckelement mit Ausnahme wenigstens einer Seitenfläche des Abdeckelements vollständig umgibt, vorzugsweise das Abdeckelement umflutet, wobei bevorzugt sich die Seitenfläche in einer Ebene parallel zu einer äußeren Fläche eines Wandelements des Deckelelements und/oder orthogonal zur Ablagefläche erstreckt. Damit kann ausschließlich ein solcher Bereich des Abdeckelements von der Abdeckung durch das Deckelelement ausgenommen sein, welcher nicht in Kontakt mit in der Ablage abgelegten Gegenständen kommt. Dies ermöglicht die Einsparung von Material, welches nicht zur sicheren Ablage benötigt wird.

Weiterhin kann die Erfindung bei einer Ablage vorsehen, dass das Abdeckelement an einer Seitenfläche mindestens ein Rastelement aufweist, welches mit mindestens einem Gegenrastelement des Ablageelementes in eine lösbare form- und/oder kraftschlüssige Verbindung bringbar ist, um das Deckelelement in einem zugeklappten Zustand zu fixieren. Somit kann mit einfachen Mitteln und auf eine kostengünstige Weise erreicht werden, dass das Deckelelement in dem zugeklappten Zustand fixiert wird. Durch Einschnappen des Rastelementes mit dem Gegenrastelement wird der zugeklappte Zustand markiert, sodass Fehler beim Ausrichten des Deckelelementes vermieden werden. Außerdem kann durch Einschnappen des Rastelementes mit dem Gegenrastelement eine haptische Rückmeldung an den Benutzer abgegeben werden, dass der zugeklappte Zustand sicher erreicht wurde.

Auch ist es optional möglich, dass die Ablage als Mobiltelefonablage ausgeführt ist, und das Abdeckelement zur vollständigen oder teilweisen Abdeckung eines Displays des Geräts als Mobiltelefon ausgeführt ist. Damit kann eine Ablenkung während der Fahrt reduziert werden.

Erfindungsgemäß ist die Ablage dazu ausgeführt, in eine Aufnahme einer Mittelkonsole des Fahrzeuges eingesetzt zu werden, wobei insbesondere das Gerät mit einer Schmalseite im Aufnahmeraum des Ablageelementes aufnehmbar ist. Zudem ist es gemäß einer Alternative erfindungsgemäß vorgesehen, dass die Ablage dazu ausgeführt ist, in eine Aufnahme zwischen einer Instrumententafel und einer Mittelkonsole des Fahrzeuges eingesetzt zu werden, wobei insbesondere das Gerät mit einer Breitseite im Aufnahmeraum des Ablageelementes aufnehmbar ist. Somit kann ein flexibler Einsatz der Ablage im Fahrzeug realisiert werden.
und vorzugsweise ein Boden des Ablageelements dazu ausgeführt ist, ein elektromagnetisches Signal einer daran angrenzenden Koppelantenne des Fahrzeuges an das Gerät weiter zu leiten. Die Koppelantenne befindet sich z. B. an der Mittelkonsole direkt angrenzend zum Boden des Ablageelements, und dient vorzugsweise zur Verstärkung eines Mobilfunksignals des Geräts und/oder zur Durchführung eines Wireless Charging, also einer kabellosen Aufladung eines Akkumulators des Geräts.

Das Gerät kann z. B. als Mobilfunkgerät zur Mobilfunkkommunikation und/oder als Smartphone und/oder als Tablet und/oder als elektronisches Endgerät und/oder als Unterhaltungselektronik und/oder als Kleingerät ausgebildet sein. Dabei kann das Gerät vorzugsweise eine Mobilfunkschnittstelle und/oder ein Display und/oder einen Akkumulator aufweisen.

Vorteilhaft ist es zudem, wenn das Fahrzeug als ein Kraftfahrzeug, insbesondere gleisloses Landkraftfahrzeug, zum Beispiel als ein Hybridfahrzeug ausgebildet ist, das eine Brennkraftmaschine und eine Elektromaschine zur Traktion umfasst oder als ein Elektrofahrzeug ausgebildet ist, vorzugsweise mit einem Hochvolt-Bordnetz und/oder einem Elektromotor. Insbesondere kann das Fahrzeug als ein Brennstoffzellenfahrzeug und/oder Personenkraftfahrzeug ausgebildet sein. Bevorzugt ist bei Ausführungsformen von Elektrofahrzeugen kein Verbrennungsmotor beim Fahrzeug vorgesehen, es wird dann ausschließlich durch elektrische Energie angetrieben. Bevorzugt weist das Fahrzeug im Fahrzeuginnenraum zwischen dem Fahrersitz und dem Beifahrersitz eine Mittelkonsole auf, in welcher die erfindungsgemäße Ablage eingesetzt werden kann.

Ebenfalls Gegenstand der Erfindung ist ein Verfahren zur Herstellung einer erfindungsgemäßen Ablage für ein Fahrzeug zur Aufnahme wenigstens eines mobilen Geräts. Hierbei ist vorgesehen, dass die nachfolgenden Schritte durchgeführt werden, bevorzugt in beliebiger oder in der angegebenen Reihenfolge:
- Herstellen eines Ablageelements aus einer Weichkomponente,
- Herstellen eines Abdeckelements aus einer Hartkomponente,
- Umfluten des Abdeckelements von einer Weichkomponente, um ein Deckelelement zu bilden,
- Verbinden des Deckelelements, welches das Abdeckelement umgibt, vorzugsweise über ein angespritztes Filmscharnier mit dem Ablageelement.

Damit bringt das erfindungsgemäße Verfahren die gleichen Vorteile mit sich, wie sie ausführlich mit Bezug auf eine erfindungsgemäße Ablage beschrieben worden sind.

Es kann weiter möglich sein, dass wenigstens einer der Schritte, vorzugsweise das Herstellen des Ablageelements und/oder das Herstellen des Abdeckelements und/oder das Umfluten und/oder das Verbinden, im Zweikomponenten-Spritzgussverfahren durchgeführt wird. Insbesondere können bei einem Zweikomponenten-Spritzguss die Schritte eines erfindungsgemäßen Verfahrens in einem einzigen Werkzeug durchgeführt werden, alternativ können ohne Einsatz des Zweikomponenten-Spritzgussverfahrens wenigstens zwei Werkzeuge für diese Schritte bzw. zur Herstellung der Ablage genutzt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung einer erfindungsgemäßen Ablage,
- Figur 2: eine schematische Darstellung einer Mittelkonsole eines Fahrzeuges,
- Figur 3: eine schematische Darstellung einer erfindungsgemäßen Ablage in einem zugeklappten Zustand, wobei die Ablage in einer Mittelkonsole eines Fahrzeuges eingesetzt ist;
- Figur 4: eine schematische Darstellung einer erfindungsgemäßen Ablage in einem aufgeklappten Zustand, wobei die Ablage in einer Mittelkonsole eines Fahrzeuges eingesetzt ist,
- Figur 5: eine schematische Darstellung einer Aufnahme einer Mittelkonsole für die erfindungsgemäße Ablage,
- Figur 6: eine schematische Darstellung einer Aufnahme einer Mittelkonsole mit einer eingesetzten, erfindungsgemäßen Ablage,
- Figur 7: eine schematische Darstellung einer erfindungsgemäßen Ablage in einem aufgeklappten Zustand,
- Figur 8: eine schematische Darstellung einer Aufnahme zwischen einer Instrumententafel und einer Mittelkonsole für die erfindungsgemäße Ablage mit einem zugeklappten Deckelelement,
- Figur 9: eine schematische Darstellung einer Aufnahme zwischen einer Instrumententafel und einer Mittelkonsole für die erfindungsgemäße Ablage mit einem aufgeklappten Deckelelement,
- Figur 10: eine schematische Darstellung eines Scharnierelementes zum Aufklappen eines Deckelelementes,
- Figur 11: eine schematische Darstellung eines Scharnierelementes mit mindestens einem Rückstellelement für ein Deckelelement in einer Draufsicht,
- Figur 12: eine schematische Darstellung eines Scharnierelementes mit mindestens einem Rückstellelement für ein Deckelelement in einer seitlichen Ansicht,
- Figur 13: eine schematische Darstellung eines Rastelementes zum Fixieren eines Deckelelementes, und
- Figur 14: eine schematische Darstellung eines Rastelementes zum Fixieren eines Deckelelementes in einer Schnittdarstellung.

In den nachfolgenden Figuren werden für die gleichen technischen Merkmale auch von unterschiedlichen Ausführungsbeispielen die identischen Bezugszeichen verwendet.

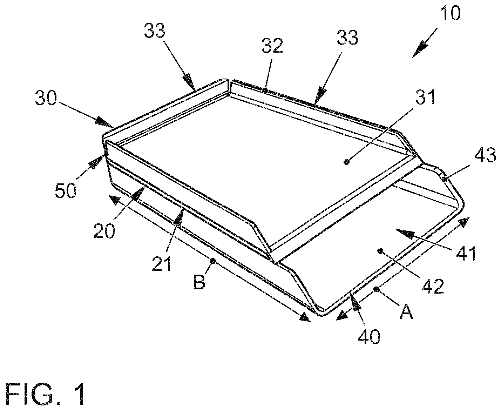

In Figur 1 ist schematisch eine erfindungsgemäße Ablage 10 gezeigt. Dabei kann die erfindungsgemäße Ablage 10 dazu geeignet sein, in einer Mittelkonsole 3 eines Fahrzeuges 2 eingesetzt zu werden, um wenigstens ein mobiles Gerät 1 aufzunehmen. Das mobile Gerät 1 ist beispielsweise als ein Mobiltelefon oder Smartphone oder dergleichen ausgebildet.

In Figur 1 ist zudem gezeigt, dass die erfindungsgemäße Ablage 10 ein Abdeckelement 20 aufweisen kann, welches beispielsweise aus einer Hartkomponente hergestellt ist. Ferner kann ein Deckelelement 30 und ein Ablageelement 40 vorgesehen sein, welche jeweils aus einer Weichkomponente hergestellt sind. Das Deckelelement 30 kann eine obere Schale der erfindungsgemäßen Ablage 10 zur Aufnahme von Kleingegenständen ausbilden. Das Ablageelement 40 kann eine untere Schale der erfindungsgemäßen Ablage 10 zur Aufnahme des mobilen Geräts 1 ausbilden. Die Richtungsangaben beziehen sich dabei auf die Fahrzeugrichtungen im in das Fahrzeug bzw. die Mittelkonsole eingesetzten Zustand der erfindungsgemäßen Ablage 10.

Das Ablageelement 40 kann einen Aufnahmeraum 41 zur Aufnahme des Geräts 1 ausbilden. Das Abdeckelement 20 kann den Aufnahmeraum 41 dabei zumindest teilweise abdecken, um z. B. eine Sicht auf ein Display 6 des mobilen Geräts 1 zu verhindern. Das Deckelelement 30 kann am Abdeckelement 20 ausgebildet sein und es zumindest teilweise umgeben, sodass das Deckelelement 30 eine Ablagefläche 31 ausbildet. Somit kann diese Ablagefläche 31 eine rutschfeste Ablage für Kleingegenstände bieten. In Figur 1 ist dabei erkennbar, dass das Deckelelement 30 das Abdeckelement 20 nur mit Ausnahme wenigstens einer Seitenfläche 21 des Abdeckelements 20 vollständig umgibt bzw. das Abdeckelement 20 vollständig umflutet. Ebenfalls erkennbar ist, dass die Seitenfläche 21 in einer Ebene parallel zu einer äußeren Fläche eines Wandelements 32 des Deckelelements 30 und orthogonal zur Ablagefläche 31 sich erstreckt. Somit ist nur ein solcher Bereich des Abdeckelements 20 nicht durch das Deckelelement 30 abgedeckt, welcher nicht mit abgelegten Gegenständen der erfindungsgemäßen Ablage 10 in Berührung kommen kann.

Die Ablagefläche 31 wird begrenzt durch wenigstens ein Wandelement 32, welches von einem Rand 33 der Ablagefläche 31 absteht und diese somit begrenzt. Einen ähnlichen Aufbau in der Art einer Schale weist das Ablageelement 40 auf, welches einen Boden 42 ausbildet, an dessen Rand eine Wandung 43 absteht. Auf diese Weise kann der Aufnahmeraum 41 derart gebildet werden, dass ein sich darin befindlicher Gegenstand bzw. das mobile Gerät 1 nicht herausfallen kann.

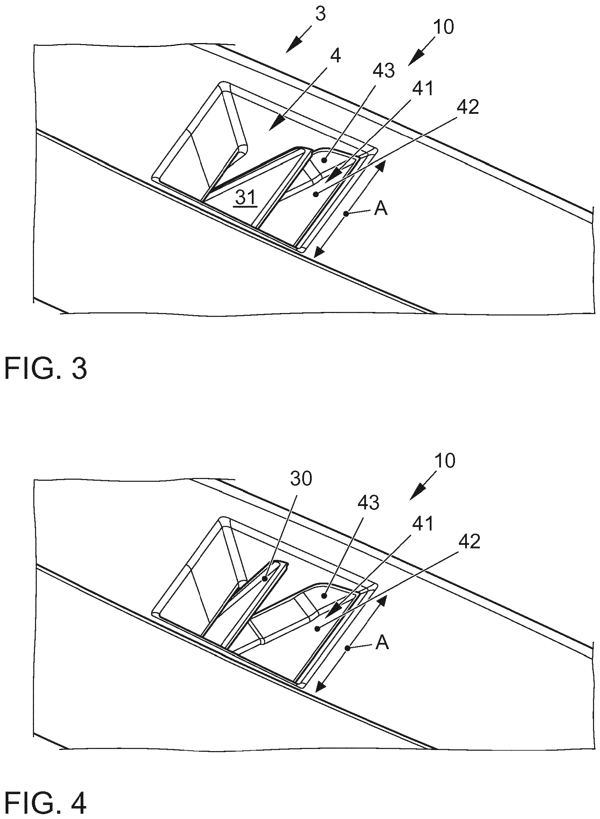

Auf der in Figur 1 abgewandten Rückseite der erfindungsgemäßen Ablage 10 kann ferner ein Filmscharnier 50 ausgebildet sein, um das Abdeckelement 20 oder das Deckelelement 30 klappbar mit dem Ablageelement 40 zu verbinden. Dies ermöglicht es, die erfindungsgemäße Ablage 10 von einem zugeklappten Zustand (in Figur 3 dargestellt) in einen aufgeklappten Zustand (in Figur 4 dargestellt) zu überführen.

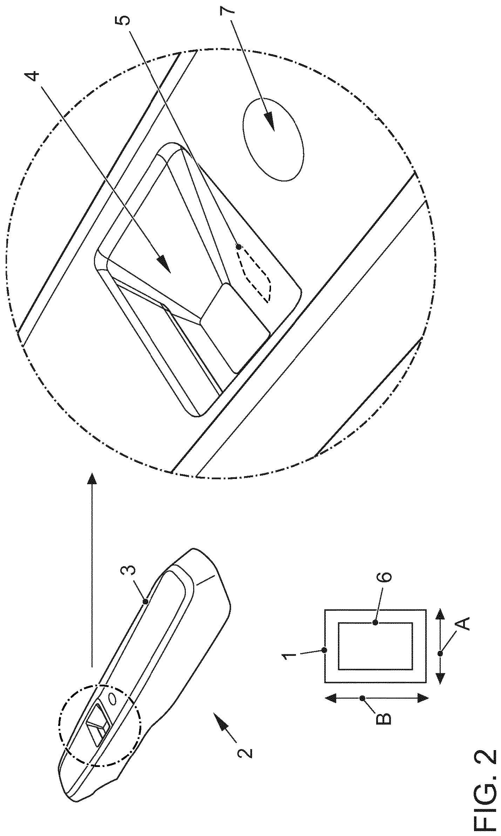

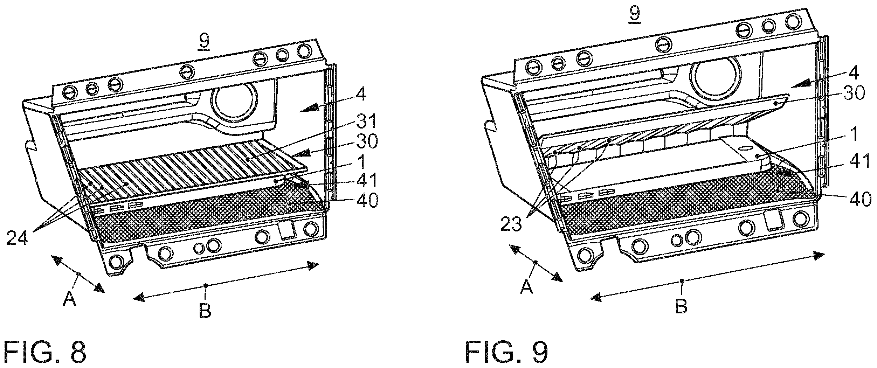

In Figur 2 ist schematisch eine Mittelkonsole 3 eines Fahrzeuges 2 dargestellt, welche eine Aufnahme 4 für eine erfindungsgemäße Ablage 10 aufweist. In der Aufnahme 4 kann eine Koppelantenne 5 integriert sein, welche zur Signalverbindung mit einem mobilen Gerät 1 dient. Ferner können diverse Schnittstellen 7, z. B. USB-Schnittstellen, zur Datenverbindung mit dem mobilen Gerät 1 an der Mittelkonsole 3 vorgesehen sein. In der Figur 2 sind eine Breitseite B und eine Schmalseite A des Geräts 1 mit Doppelpfeilen angedeutet. In dem Ausführungsbeispiel der Figur 2 ist die Aufnahme 4 in der Mittelkonsole 3 ausgebildet. Hierbei wird das mobile Gerät 1 mit einer Schmalseite A in den Aufnahmeraum 41 des Ablageelementes 40 eingeführt. Im Rahmen der Erfindung sind neben der in der Figur 2 gezeigten Aufnahme 4 für die erfindungsgemäße Ablage 1 auch andere Aufnahmen 4 im Fahrzeug 2 denkbar. Auf eine weitere mögliche Aufnahme 4 für die erfindungsgemäße Ablage 10 im Fahrzeug 2 wird nachfolgend mithilfe der Figuren 8 und 9 eingegangen.

In Figuren 3 und 4 ist die erfindungsgemäße Ablage 10 in einem eingesetzten Zustand in der Mittelkonsole 3 gezeigt. Es ist erkennbar, dass auch in dem in Figur 3 gezeigten zugeklappten Zustand ein mobiles Gerät 1 in einfacher Weise, insbesondere mit der Schmalseite A, in den Aufnahmeraum 41 eingeschoben werden kann. Zum Entnehmen des mobilen Geräts 1 kann ferner die erfindungsgemäße Ablage 10 gemäß Figur 4 aufgeklappt werden. Die hierfür notwendige ausreichende Stabilität wird durch das Abdeckelement 20 bereitgestellt.

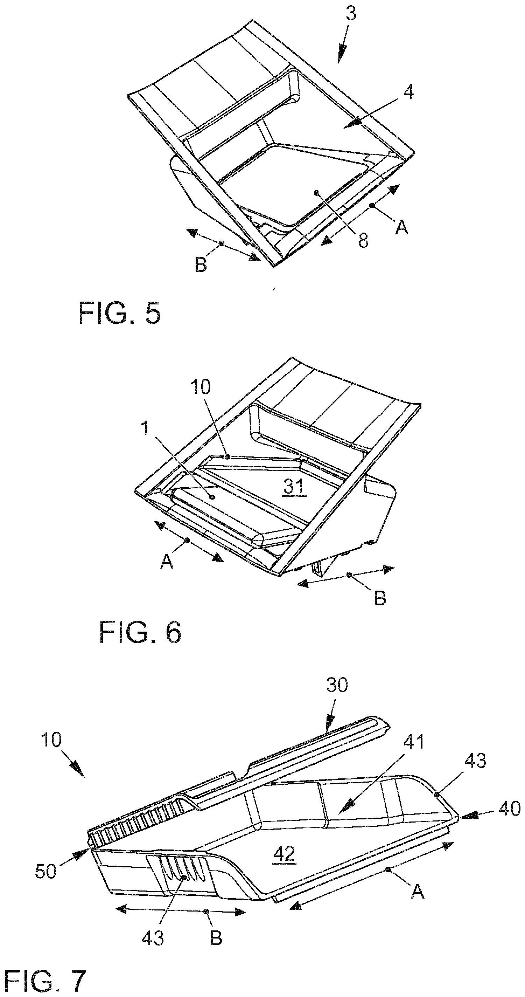

In Figur 5 ist eine Aufnahme 4 einer Mittelkonsole 3 mit weiteren Einzelheiten dargestellt. Es ist erkennbar, dass eine Strukturanpassung 8 der Aufnahme 4 für eine Koppelantenne 5 vorgesehen sein kann, um eine Verbindung zwischen dem Gerät 1 und der Koppelantenne 5 zu ermöglichen. Eine entsprechende Anpassung kann ggf. am Boden 42 des Ablageelements 40 vorgesehen sein.

Figur 6 zeigt eine beispielhafte Ausbildung der erfindungsgemäßen Ablage 10, bei welcher ein mobiles Gerät 1 in den Aufnahmeraum 41 eingesetzt ist. Dabei kann es möglich sein, dass das mobile Gerät 1 auch derart weit in den Aufnahmeraum 41 eingeschoben werden kann, dass eine Oberseite des mobilen Geräts 1 vollständig durch die Ablagefläche 31 und/oder das Abdeckelement 20 abgedeckt ist.

Figur 7 zeigt eine erfindungsgemäße Ablage 10, bei welcher sich das Deckelelement 30 im aufgeklappten Zustand befindet. Das Aufklappen wird beispielsweise durch ein Filmscharnier 50 auf der Rückseite der erfindungsgemäßen Ablage 10 ermöglicht, welches sich ggf. teilweise entlang eines Rands 33 der Ablagefläche 31 erstreckt. Ferner ist in Figur 7 erkennbar, dass das Abdeckelement 20 gemäß einem erfindungsgemäßen Verfahren durch eine Weichkomponente umflutet ist, um das Abdeckelement 20 zu bilden.

Die Figuren 8 und 9 zeigen eine weitere mögliche Aufnahme 4 für die erfindungsgemäße Ablage 10 in einem Innenraum des Fahrzeuges 2. Diese Aufnahme 4 kann bspw. zwischen einer Instrumententafel 9 und einer Mittelkonsole 3 des Fahrzeuges 2 liegen. Hierbei ist es denkbar, dass das Gerät 1 mit einer Breitseite B im Aufnahmeraum 41 des Ablageelementes 40 aufnehmbar ist. Die Ablage 10 kann im Wesentlichen gleich mit der Ablage 10 gemäß der Figur 1 oder 2 ausgebildet sein, mit der Ausnahme, dass der Aufnahmeraum 41 von einer Breitseite B des Geräts offen ist. Weitere Merkmale der Ablage 10, wie zum Beispiel ein Filmscharnier 50 zum Aufklappen des Deckelelementes 30, ein Rückstellelement 52, 53 zum Rückfedern des Deckelelementes 30 usw. können auch bei der in den Figuren 8 und 9 gezeigten Ablage 10 vorhanden sein.

Die Figuren 8 und 9 zeigen, dass das Deckelelement 30 unterseitig weiche elastische Rillen 23 aufweisen kann, um das mobile Gerät 1 nicht zu beschädigen. Oberseitig, bspw. auf der Auflagefläche 31, kann das Deckelelement 30 eine Strukturierung 24 aufweisen, damit die Kleingegenstände nicht rutschen.

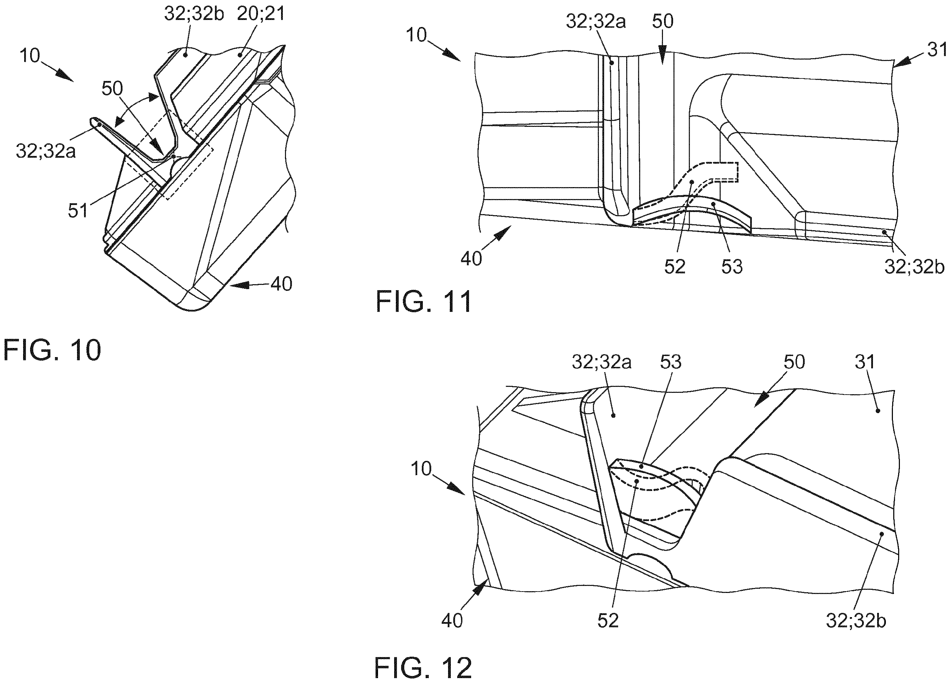

Wie es die Figur 10 zeigt, kann der Filmscharnier 50 zwischen einem Wandelement 32 und der Ablagefläche 31 des Deckelelementes 30 ausgebildet sein. Der Filmscharnier 50 weist eine Klapp-/Drehachse 51 zum Aufklappen oder Zuklappen des Deckelelementes 30 auf. Je nach Anordnung der Ablage 10 in der Mittelkonsole 3 gemäß der Figur 2 oder zwischen der Instrumententafel 9 und der Mittelkonsole 3 gemäß der Figur 8 kann das Wandelement 32 das hintere Wandelement 32a oder das seitliche Wandelement 32b sein. Vorzugsweise ist das Wandelement 32, in der Nähe von welchem der Filmscharnier 50 ausgebildet ist, vom Fahrzeuginnenraum und/oder vom Fahrer abgewandt.

Wie es des Weiteren die Figuren 11 und 12 zeigen, kann der Filmscharnier 50 mindestens ein Rückstellelement 52, 53 aufweisen, um das Deckelelement 30 beim Überführen aus dem aufgeklappten Zustand in den zugeklappten Zustand zu unterstützen. Vorzugsweise kann jeweils ein Rückstellelement 52, 53 links und rechts endseitig von dem entsprechenden Wandelement 32 vorgesehen sein. Nach dem Komprimieren bewirkt das Rückstellelement 52 eine Rückfederung des Deckelelementes 30 aus dem aufgeklappten Zustand in den zugeklappten Zustand.

Im Rahmen der Erfindung ist es denkbar, dass das mindestens eine Rückstellelement 52, 53 federnd und/oder elastisch ausgebildet sein kann. Das mindestens eine Rückstellelement 52, 53 kann bspw. aus der gleichen Weichkomponente ausgebildet sein wie das Deckelelement 30 oder aus einem anderen Material.

In den Figuren 11 und 12 sind zwei Varianten des Rückstellelementes 52, 53 gezeigt, nämlich in Form eines S-förmigen Stegs 52 oder eines C-förmigen Stegs 53. Durch derartige Formen des Rückstellelementes 52, 53 kann eine Rückfederung nach dem Komprimieren des Rückstellelementes 52, 53 bewirkt werden. Beim Aufklappen des Deckelelementes 30 wird das Rückstellelement 52, 53 in den Windungen des S-förmigen Stegs 52 oder in der Rundung des C-förmigen Stegs 53 zusammengepresst. Wenn das Deckelelement 30 losgelassen wird, erfolgt die Entspannung des Rückstellelementes 52, 53 und die Zurückfederung des Deckelelementes 30 in den vorgesehen zugeklappten Zustand. Weitere Ausgestaltungen des Rückstellelementes 52, 53 sind im Rahmen der Erfindung ebenfalls denkbar, bspw. in Form von Dämpfungselementen oder in Form von Nocken zum Abfedern einer Aufklappbewegung des Deckelelementes 30 gegen ein entsprechendes Wandelement 32.

Wie es außerdem aus den Figuren 11 und 12 zu erkennen ist, kann das mindestens eine Rückstellelement 52, 53 zwischen einem hinteren Wandelement 32a und einem seitlichen Wandelement 32b des Deckelelementes 30 ausgebildet sein. In diesem Bereich erstreckt sich das Filmscharnier 50. Am Filmscharnier 50 weist das Deckelelement 30 eine Verjüngung auf. In diesem Bereich kann ein relativ kurzer Verstellweg des Rückstellelementes 52, 53 realisiert werden, um das Deckelelement 30 relativ stabil in den vorgesehenen, zugeklappten Zustand überführen zu können.

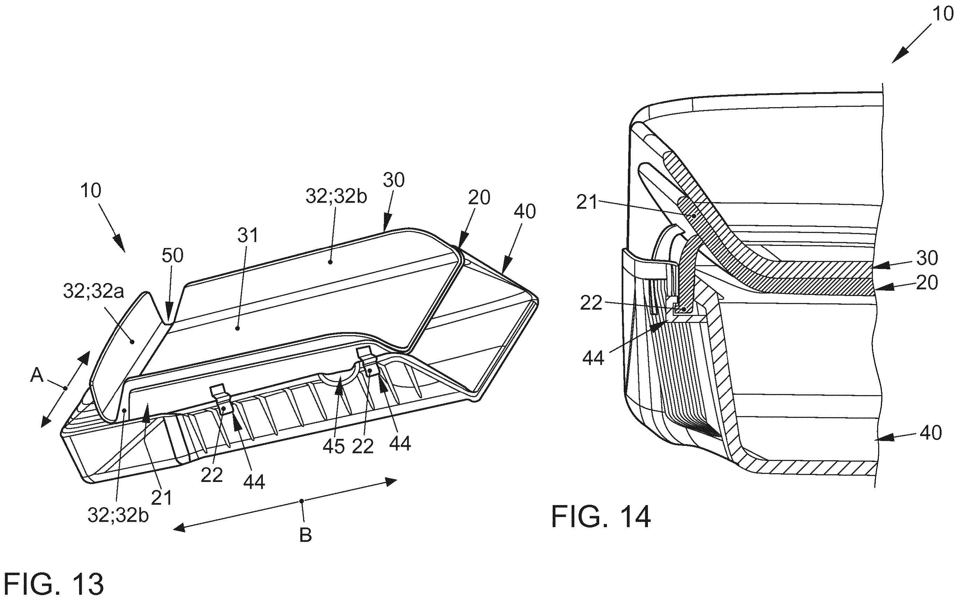

In der Figur 13 ist es zu erkennen, dass das Ablageelement 40 eine Ausformung in Form einer Öffnungshilfe 45 aufweisen kann, um ein Öffnen des Deckelelementes 30 zu erleichtern. Weiterhin zeigen die Figuren 13 und 14, dass das Abdeckelement 20 an einer Seitenfläche 21 mindestens ein Rastelement 22 aufweist (gezeigt sind beispielhaft zwei Rastelemente 22). Das Rastelement 22 kann mit mindestens einem Gegenrastelement 44 des Ablageelementes 40 in eine lösbare form- und/oder kraftschlüssige Verbindung bringbar sein, um das Deckelelement 30 in einem zugeklappten Zustand zu fixieren.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen, die durch die nachstehenden Ansprüche definiert wird.

### Bezugszeichenliste

- 1: Gerät, Mobiltelefon
- 2: Fahrzeug
- 3: Mittelkonsole
- 4: Aufnahme
- 5: Koppelantenne
- 6: Display
- 7: Schnittstellen
- 8: Strukturanpassung für 5
- 9: Instrumententafel

- 10: Ablage

- 20: Abdeckelement
- 21: Seitenfläche
- 22: Rastelement
- 23: Rillen
- 24: Strukturierung

- 30: Deckelelement
- 31: Ablagefläche
- 32: Wandelement
- 32a: hinteres Wandelement
- 32b: seitliches Wandelement
- 33: Rand/Rahmen

- 40: Ablageelement
- 41: Aufnahmeraum
- 42: Boden
- 43: Wandung
- 44: Gegenrastelement
- 45: Öffnungshilfe

- 50: Filmscharnier
- 51: Klapp-/Drehachse
- 52: Rückstellelement, S-förmiger Steg
- 53: Rückstellelement, C-förmiger Steg

- A: Schmalseite von 1
- B: Breitseite von 1

## Patentansprüche

1. Ablage (10) für ein Fahrzeug (2) zur Aufnahme wenigstens eines mobilen Geräts (1), aufweisend:
- ein Ablageelement (40), welches einen Aufnahmeraum (41) zur Aufnahme des Geräts (1) ausbildet,
- ein Abdeckelement (20), welches den Aufnahmeraum (41) zumindest teilweise abdeckt,
- ein Deckelelement (30), welches am Abdeckelement (20) ausgebildet ist und dieses zumindest teilweise umgibt, sodass das Deckelelement (30) eine Ablagefläche (31) ausbildet,
wobei die Ablage (10) dazu ausgeführt ist, in eine Aufnahme (4) einer Mittelkonsole (3) des Fahrzeuges (2) eingesetzt zu werden, oder dass die Ablage (10) dazu ausgeführt ist, in eine Aufnahme (4) zwischen einer Instrumententafel (9) und einer Mittelkonsole (3) des Fahrzeuges (2) eingesetzt zu werden und wobei das Deckelelement (30) aufklappbar mit dem Ablageelement (40) verbunden ist und den Aufnahmeraum (41) zumindest teilweise abdeckt,
und wobei das Abdeckelement (20) zur Stabilisierung zumindest des Deckelelements (30) ausgebildet ist,
**dadurch gekennzeichnet,**
**dass** das Abdeckelement (20) aus einer Hartkomponente hergestellt ist, wobei das Ablageelement (40) und das Deckelelement (30) jeweils aus einer Weichkomponente hergestellt sind und wobei das Deckelelement (30) wenigstens ein Wandelement (32) aufweist, welches an einem Rand (33) der Ablagefläche (31), insbesondere orthogonal, absteht und somit die Ablagefläche (31) begrenzt, sodass das Deckelelement (30) eine Schale (30) zur Aufnahme von Gegenständen ausbildet.

2. Ablage (10) nach Anspruch 1,
**dadurch gekennzeichnet,**
**dass** die Ablage (10) als Zweikomponenten-Spritzgussteil ausgeführt ist, vorzugsweise einstückig und/oder einteilig und/oder monolithisch.

3. Ablage (10) nach einem der vorhergehenden Ansprüche,
**dadurch gekennzeichnet,**
**dass** ein Filmscharnier (50) vorgesehen ist, welches das Deckelelement (30) aufklappbar mit dem Ablageelement (40) verbindet, insbesondere dass das Filmscharnier (50) zwischen einem Wandelement (32) und einer Ablagefläche (31) des Deckelelementes (30) ausgebildet ist.

4. Ablage (10) nach Anspruch 3,
**dadurch gekennzeichnet,**
**dass** das Filmscharnier (50) mindestens ein Rückstellelement (52, 53) aufweist, um das Deckelelement (30) beim Überführen aus einem aufgeklappten Zustand in einen zugeklappten Zustand zu unterstützen, insbesondere
**dass** das mindestens eine Rückstellelement (52, 53) federnd und/oder elastisch ausgebildet ist,
und/oder dass das mindestens eine Rückstellelement (52, 53) aus einer Weichkomponente ausgebildet ist.

5. Ablage (10) nach Anspruch 4,
**dadurch gekennzeichnet,**
**dass** das mindestens eine Rückstellelement (52, 53) in Form eines S-förmigen Stegs (52) oder eines C-förmigen Stegs (53) ausgebildet ist.

6. Ablage (10) nach einem der Ansprüche 4-5,
**dadurch gekennzeichnet,**
**dass** das mindestens eine Rückstellelement (52, 53) zwischen einem hinteren Wandelement (32a) und einem seitlichen Wandelement (32b) des Deckelelementes (30) ausgebildet ist.

7. Ablage (10) nach einem der vorhergehenden Ansprüche,
**dadurch gekennzeichnet,**
**dass** die gesamte Ablagefläche (31) das Abdeckelement (20) überdeckt.

8. Ablage (10) nach einem der vorhergehenden Ansprüche,
**dadurch gekennzeichnet,**
**dass** das Deckelelement (30) das Abdeckelement (20) mit Ausnahme wenigstens einer Seitenfläche (21) des Abdeckelements (20) vollständig umgibt, vorzugsweise umflutet, wobei sich die Seitenfläche (21) in einer Ebene parallel zu einer äußeren Fläche eines Wandelements (32) des Deckelelements (30) und/oder orthogonal zur Ablagefläche (31) erstreckt.

9. Ablage (10) nach einem der vorhergehenden Ansprüche,
**dadurch gekennzeichnet,**
**dass** das Abdeckelement (20) an einer Seitenfläche (21) mindestens ein Rastelement (22) aufweist, welches mit mindestens einem Gegenrastelement (44) des Ablageelementes (40) in eine lösbare form- und/oder kraftschlüssige Verbindung bringbar ist, um das Deckelelement (30) in einem zugeklappten Zustand zu fixieren.

10. Ablage (10) nach einem der vorhergehenden Ansprüche,
**dadurch gekennzeichnet,**
**dass** die Ablage (10) als Mobiltelefonablage ausgeführt ist, und das Abdeckelement (20) zur vollständigen oder teilweisen Abdeckung eines Displays des Geräts (1) als Mobiltelefon (1) ausgeführt ist.

11. Ablage (10) nach einem der vorhergehenden Ansprüche,
**dadurch gekennzeichnet,**
**dass** ein Boden (42) des Ablageelements (40) dazu ausgeführt ist, ein elektromagnetisches Signal einer daran angrenzenden Koppelantenne des Fahrzeuges (2) an das Gerät (1) weiter zu leiten.

12. Verfahren zur Herstellung einer Ablage (10) für ein Fahrzeug (2) zur Aufnahme wenigstens eines mobilen Geräts (1), wobei die Ablage (10) nach einem der Ansprüche 1 bis 11 ausgebildet ist,
**wobei die nachfolgenden Schritte durchgeführt werden:**
- Herstellen eines Ablageelements (40) aus einer Weichkomponente,
- Herstellen eines Abdeckelements (20) aus einer Hartkomponente,
- Umfluten des Abdeckelements (20) von einer Weichkomponente, um ein Deckelelement (30) zu bilden,
- Verbinden des Deckelelements (30), welches das Abdeckelement (20) umgibt, mit dem Ablageelement (40), wobei das Deckelelement (30) aufklappbar mit dem Ablageelement (40) verbunden wird.

13. Verfahren nach Anspruch 12,
**dadurch gekennzeichnet,**
**dass** wenigstens einer der Schritte, vorzugsweise das Herstellen des Ablageelements (40) und/oder das Herstellen des Abdeckelements (20) und/oder das Umfluten und/oder das Verbinden, im Zweikomponenten-Spritzgussverfahren durchgeführt wird.

## Claims

1. Storage compartment (10) for a vehicle (2), for receiving at least one mobile device (1), comprising:
- a storage element (40) which forms a receiving space (41) for receiving the device (1),
- a cover element (20) which at least partially covers the receiving space (41),
- a lid element (30) which is formed on the cover element (20) and at least partially surrounds it, so that the lid element (30) forms a storage surface (31),
the storage compartment (10) being designed to be inserted into a receptacle (4) of a center console (3) of the vehicle (2), or the storage compartment (10) being designed to be inserted into a receptacle (4) between an instrument panel (9) and a center console (3) of the vehicle (2), and the lid element (30) being hingedly connected to the storage element (40) and at least partially covering the receiving space (41),
and the cover element (20) being designed to stabilize at least the lid element (30),
**characterized in that**
the cover element (20) is produced from a hard component, the storage element (40) and the lid element (30) each being produced from a soft component, and the lid element (30) having at least one wall element (32) which protrudes from an edge (33) of the storage surface (31), in particular orthogonally, and thus delimits the storage surface (31), so that the lid element (30) forms a tray (30) for receiving objects.

2. Storage compartment (10) according to claim 1,
**characterized in that**
the storage compartment (10) is designed as a two-component injection-molded part, preferably integrally and/or in one piece and/or monolithically.

3. Storage compartment (10) according to either of the preceding claims,
**characterized in that**
a film hinge (50) is provided which hingedly connects the lid element (30) to the storage element (40), in particular
**in that** the film hinge (50) is formed between a wall element (32) and a storage surface (31) of the lid element (30).

4. Storage compartment (10) according to claim 3,
**characterized in that**
the film hinge (50) has at least one return element (52, 53) to support the lid element (30) in transferring from an opened state to a closed state, in particular
**in that** the at least one return element (52, 53) is formed resiliently and/or elastically,
and/or **in that** the at least one return element (52, 53) is formed from a soft component.

5. Storage compartment (10) according to claim 4,
**characterized in that**
the at least one return element (52, 53) is formed in the shape of an S-shaped web (52) or of a C-shaped web (53).

6. Storage compartment (10) according to any of claims 4-5,
**characterized in that**
the at least one return element (52, 53) is formed between a rear wall element (32a) and a side wall element (32b) of the lid element (30).

7. Storage compartment (10) according to any of the preceding claims,
**characterized in that**
the entire storage surface (31) overlays the cover element (20).

8. Storage compartment (10) according to any of the preceding claims,
**characterized in that**
the lid element (30) completely surrounds, preferably encloses, the cover element (20) with the exception of at least one side surface (21) of the cover element (20), the side surface (21) extending in a plane parallel to an outer surface of a wall element (32) of the lid element (30) and/or orthogonally to the storage surface (31).

9. Storage compartment (10) according to any of the preceding claims,
**characterized in that**
the cover element (20) has at least one latching element (22) on a side surface (21), which latching element can be brought into a releasable form-fitting and/or force-fitting connection with at least one counter-latching element (44) of the storage element (40) in order to fix the lid element (30) in a closed state.

10. Storage compartment (10) according to any of the preceding claims,
**characterized in that**
the storage compartment (10) is designed as a mobile phone compartment, and the cover element (20) is designed to completely or partially cover a display of the device (1), the device being a mobile phone (1).

11. Storage compartment (10) according to any of the preceding claims,
**characterized in that**
a base (42) of the storage element (40) is designed to transmit an electromagnetic signal from an adjacent coupling antenna of the vehicle (2) to the device (1).

12. Method for producing a storage compartment (10) for a vehicle (2), for receiving at least one mobile device (1), wherein the storage compartment (10) is formed according to any of claims 1-11,
**wherein the following steps are carried out:**
- producing a storage element (40) from a soft component,
- producing a cover element (20) from a hard component,
- enclosing the cover element (20) with a soft component to form a lid element (30),
- connecting the lid element (30), which surrounds the cover element (20), to the storage element (40), wherein the lid element (30) is hingedly connected to the storage element (40).

13. Method according to claim 12,
**characterized in that**
at least one of the steps, preferably producing the storage element (40) and/or producing the cover element (20) and/or enclosing and/or connecting, is carried out in a two-component injection molding process.

## Revendications

1. Réceptacle (10) pour un véhicule (2), destiné au logement d'au moins un appareil (1) mobile, présentant :
- un élément de réception (40) qui forme un espace de logement (41) pour le **logement de l'appareil** (1),
- un élément de recouvrement (20) qui recouvre au moins partiellement **l'espace de logement** (41),
- un élément couvercle **(30) réalisé sur l'élément de recouvrement** (20) et entourant au moins partiellement celui-ci, **de sorte que l'élément couvercle** (30) forme une surface de réception (31),
dans lequel le réceptacle (10) est conçu pour être inséré dans un logement **(4) d'une console centrale** (3) du véhicule (2), ou dans lequel le réceptacle (10) est conçu pour être inséré dans un logement (4) entre un tableau de bord (9) et une console centrale (3) du véhicule **(2), et dans lequel** l'élément couvercle **(30) est relié de manière rabattable à l'élément de réception** (40) et **recouvre au moins partiellement l'espace de logement** (41),
**et dans lequel l'élément de recouvrement** (20) est réalisé pour la **stabilisation d'au moins l'élément couvercle** (30),
**caractérisé en ce**
**que** l'élément de recouvrement (20) est fabriqué à partir d'un composant rigide, dans lequel l'élément de réception (40) et l'élément couvercle (30) sont **respectivement fabriqués à partir d'un composant souple, et dans lequel l'élément** couvercle (30) présente au moins un élément paroi (32) qui fait saillie sur un bord (33) de la surface de réception (31), en particulier de manière orthogonale, et délimite ainsi la surface de réception **(31), de sorte que l'élément couvercle** (30) forme une coque **(30) pour le logement d'objets.**

2. Réceptacle (10) selon la revendication 1,
**caractérisé en ce**
**que** le réceptacle (10) est conçu sous forme de pièce moulée par injection **à deux composants, de préférence d'un seul tenant et/ou en une seule pièce et/ou** de manière monolithique.

3. Réceptacle (10) selon l'une des revendications précédentes,
**caractérisé en ce**
**qu'**il est prévu une charnière en film **(50) qui relie l'élément couvercle** (30) **de manière rabattable à l'élément de réception** (40), en particulier
**en ce que** la charnière en film (50) est réalisée entre un élément paroi (32) et une surface de réception **(31) de l'élément couvercle** (30).

4. Réceptacle (10) selon la revendication 3,
**caractérisé en ce**
**que** la charnière en film (50) présente au moins un élément de rappel (52, **53) pour soutenir l'élément couvercle (30) lors du passage d'un état déployé à** un état fermé, en particulier
**en ce que l'au moins un élément de rappel** (52, 53) est réalisé à ressort et/ou de manière élastique,
**et/ou en ce que l'au moins un élément de rappel** (52, 53) est réalisé à **partir d'un composant souple.**

5. Réceptacle (10) selon la revendication 4,
**caractérisé en ce**
**que l'au moins un élément de rappel** (52, 53) est réalisé sous la forme **d'une barrette en forme de S (52) ou d'une barrette en forme de C** (53).

6. Réceptacle **(10) selon l'une des revendications** 4 à 5,
**caractérisé en ce**
**que l'au moins un élément de rappel** (52, 53) est réalisé entre un élément paroi arrière (32a) et un élément paroi latéral **(32b) de l'élément couvercle** (30).

7. Réceptacle **(10) selon l'une des revendications précédentes,**
**caractérisé en ce**
**que l'ensemble de la surface de réception (31) recouvre l'élément de** recouvrement (20).

8. Réceptacle **(10) selon l'une des revendications précédentes,**
**caractérisé en ce**
**que l'élément couvercle** (30) entoure complètement, enrobe de **préférence, l'élément de recouvrement (20) à l'exception d'au moins une surface** latérale **(21) de l'élément de recouvrement** (20), dans lequel la surface latérale **(21) s'étend dans** un **plan parallèle à une surface extérieure d'un élément** paroi **(32) de l'élément couvercle** (30) et/ou orthogonal à la surface de réception (31).

9. Réceptacle **(10) selon l'une des revendications précédentes,**
**caractérisé en ce**
**que l'élément de recouvrement** (20) présente, sur une surface latérale **(21), au moins un élément d'encliquetage** (22) qui peut être relié de manière amovible par complémentarité de forme et/ou à force avec au moins un contre-**élément d'encliquetage (44) de l'élément de réception** (40), afin de fixer **l'élément couvercle** (30) dans un état fermé.

10. Réceptacle **(10) selon l'une des revendications précédentes,**
**caractérisé en ce**
**que** le réceptacle (10) est conçu sous forme de réceptacle de téléphone **mobile, et l'élément de recouvrement** (20) est conçu pour recouvrir entièrement ou **partiellement un écran de l'appareil** (1) sous forme de téléphone mobile (1).

11. Réceptacle **(10) selon l'une des** revendications précédentes,
**caractérisé en ce**
**qu'**un fond **(42) de l'élément de réception** (40) est conçu pour transmettre **à l'appareil** (1) **un signal électromagnétique d'une antenne de couplage du** véhicule (2), **laquelle antenne de couplage est adjacente à l'élément de réception.**

12. **Procédé de fabrication d'un réceptacle** (10) pour un véhicule (2), destiné **au logement d'au moins un appareil** (1) mobile, dans lequel le réceptacle (10) est **réalisé selon l'une des revendications** 1 à 11,
**dans lequel les étapes suivantes sont réalisées :**
- **fabrication d'un élément de réception** (40) à partir d'un composant souple,
- **fabrication d'un élément de recouvrement** (20) à partir d'un composant rigide,
- **enrobage de l'élément de recouvrement** (20) par un composant souple pour former un élément couvercle (30),
- liaison **de l'élément couvercle (30), qui entoure l'élément de** recouvrement **(20), à l'élément de réception (40), dans lequel l'élément** couvercle **(30) est relié de manière rabattable à l'élément de réception** (40).

13. Procédé selon la revendication 12,
**caractérisé en ce**
**qu'**au moins l'une des étapes, de préférence la fabrication de l'élément de réception (40) et/ou la fabrication de l'élément de recouvrement (20) et/ou l'enrobage et/ou la liaison, est réalisée par un procédé de moulage par injection à deux composants.
